# EUROPEAN PATENT APPLICATION

(11) **EP 2 525 480 A1**
(43) Date of publication of application: **21.11.2012**
(21) Application number: 11166887.7
(22) Date of filing: 20.05.2011
(51) Int. Cl.: H02M 1/34, H02M 3/335

(54) **Power converter with an rcd clamp and method of operating the same**

(71) Applicant: NXP B.V., 5656 AE Eindhoven (NL)
(72) Inventor: Halberstadt, Hans, Redhil, Surrey RH1 1D (GB)
(74) Representative: Hardingham, Christopher Mark

(57) **Abstract**

A power converter (10) is disclosed which includes an RCD clamp (60) across a primary winding (21). The RCD (60) clamps the voltage across a primary winding (21) of the converter (10), during a commutation part of an operating cycle. The capacitance part (61) of the RCD clamp (60) is dimensioned so as to be substantially discharged during the remainder of the secondary stroke, and to be charged to the clamping voltage during the commutation part. A resistance (64) in series with the capacitance (61) may be dimensioned such that the voltage across it is approximately equal to the clamping voltage at the start of the commutation period.

## Description

### Field of the Invention

This invention relates to power converters having a voltage clamp on a primary side winding of a transformer, and to methods of operating such converters.

### Background of the Invention

Some types of power converter, including flyback converters, include a primary side winding as well as at least one secondary side winding. With for instance a flyback converter, energy is stored in the transformer (with inductance Lprim) during the primary stroke by applying the input voltage (Vmains) across the primary transformer winding (di/dt=Vmains/Lprim). During the secondary stroke the energy is transferred to the load, giving a reflected output-voltage (=-Vout_reflected) across the primary side of the transformer (di/dt=-Vout_reflected/Lprim) During the commutation of stored energy from primary to secondary at the beginning of the secondary stroke the leakage inductance between primary and secondary limits the speed at which the current can commutate from primary to secondary. This commutation occurs during a part of each operating cycle and thus may be referred to as the commutation part of an operating cycling. It requires a voltage significantly higher than the reflected output-voltage in order to get the current to commutate from the primary to the secondary side.

Absent any voltage clamp, high voltages can arise at the primary side. Hence, in order to protect the primary switch of a flyback converter from overvoltage especially at full load, it is necessary to apply a clamp circuit between the switching node and rectified mains.

Several configurations are known for such voltage clamping circuits, including ones based on a Zener diode together with a further diode, and ones based on a so-called RCD circuit arrangement.

A disadvantage of using a clamp is that limiting the maximum voltage at the switching node also slows down the commutation to the secondary side, because of a lower difference between Vout_reflected and voltage across the primary side of the transformer. Since during this commutation process part of the energy stored in the transformer is dissipated in the clamp, a fast commutation is an advantage for getting a higher efficiency of the converter. Using a Zener clamp, the clamping voltage is more or less fixed and constant at the desired level over load variation as it is determined by the Zener-voltage. As Zeners are relatively expensive, often the RCD clamp is used as it is a cheap solution.

With an RCD clamp, the clamping voltage is generally determined by the voltage across the clamp capacitor (C1). Typical clamping voltages are in the order of 200V, while the reflected output-voltage reaches values of approx 75-100V. The maximum clamp voltage is normally set at a level to ensure that the breakdown voltage of the primary switch is not violated: for example, 365V Peak Vmains + 200V clamp + a 150V margin for surges allows use of a 700V switch. As during each commutation interval energy is stored in the clamp capacitor, there has to be an element that removes this energy during the rest of the conversion cycle in order to keep the clamp-voltage more or less constant. For this element normally a resistor is used (R1) in parallel with C1; the value of this resistor is set to a level according to the energy stored in the clamp during the commutation at the maximum power level. Normally relatively slow diodes (D1) are used because they are cheap, but also because the slow reverse recovery behaviour is an advantage and can be used to partly remove the charge from the clamp capacitor during the recovery interval, allowing a larger value of the resistance (R1) which results in lower losses.

The term "slow" is used herein to indicate that the charge stored in the diode during the clamping action has not been significantly removed at the end of the clamping interval when the diode tends to go into reverse conduction. This gives a behaviour of the diode as if it was a short circuit.

Also the increased conduction interval of the diode during recovery just after the commutation period in combination with an extra, series, resistor (R2) is used to clamp the oscillation of the voltage at the switching node. This may be useful or necessary in applications in which the output-voltage is measured by sensing the voltage across an auxiliary winding of the transformer.

Using known RCD clamps, the combination of the components is dimensioned in such a way that the voltage across C1 is in principle constant or approximately constant and equal to the desired clamping voltage.

However, in low-power operation, it may occur that the capacitor cannot be maintained charged fully to the clamping voltage. The result is that the reduced clamping voltage at partial load and especially at extreme low loads gives considerable clamp losses and therefore causes the efficiency of the converter to drop dramatically.

It would be desirable to provide an alternative clamping circuit which does not suffer to the same extent from this drop in efficiency at partial load and extremely low load.

### Summary

According to a first aspect there is provided a power converter comprising a transformer having a primary side and a secondary side and a clamp for clamping a voltage at the primary side and across the clamp to a clamping voltage during a commutation part of an operating cycling, the operating cycle comprising at least a primary stroke and a secondary stroke including a commutation interval, the clamp comprising a parallel arrangement of a capacitance and a resistance, the parallel arrangement being in series with a diode and a further resistance, wherein the capacitance is dimensioned so as to be charged to the clamping voltage during the commutation part of the operating cycling, and to be substantially discharged during the remainder of the secondary stroke.

The capacitor may thereby be chosen to be smaller than for known clamping circuits, since it is allowed to be charged fully, while the prior art capacitor is only allowed to charge to a relatively small fraction of the clamp voltage, and the losses associated with a reduced clamping voltage, resulting in a poorer commutation and increased clamping losses and low power or no-load operating conditions, may thereby be reduced. The skilled person will appreciate that in known clamps, the capacitor remains substantially charged, within the limits of acceptable voltage ripple, which limits will depend on the design of the converter, and are thus generally specific to an individual converter design. In contrast, in embodiments of the invention, the capacitor will be substantially discharged during the secondary stroke. Without limitation, this may be more by than 5%, or more than 10% or more than 25%. In other words, in embodiments, the capacitor will be discharged to a level which is substantially lower than the clamping voltage. Similarly, the capacitor will be recharged during the primary stroke, by generally at least the same amount - and in embodiments in which the converter operates in discontinuous mode, by a further amount depending on the level of further discharge between the end of the secondary stroke and the start of the subsequent primary stroke.

In embodiments the voltage across the capacitance at the end of the secondary stroke when discharged is at most less than 50% or less than 10% greater than a reflected output-voltage across the primary side at that moment. Thus the rate of fall of the voltage across the clamp may be limited by the primary coil voltage, and towards the end of the secondary stroke may thus be determined by the reflected output-voltage (rather than the discharge rate of the clamping capacitor as in known clamps).

In embodiments the voltage across the capacitance at the start of the primary stroke is at most less than 10% or less than 1% of the clamping voltage. Thus, in discontinuous mode, where there a substantial delay between the end of the secondary stroke and the start of the subsequent primary stroke, the voltage across the clamp may fall significantly below its value at the end of the secondary stroke, prior to the start of the subsequent primary stroke. In embodiments the further resistance is dimensioned such that the voltage across it is substantially equal to the clamping voltage, at the start of the commutation part of the operating cycle.

In embodiments, the power converter is configured for a normal operating mode and a low-power operating mode, wherein the capacitance is dimensioned so as, during operation in each of the normal operating mode and a low-power operating mode, to be charged to the clamping voltage during the commutation part of the operating cycling, and to be substantially discharged during another part of the operating cycling. In the normal operating mode a switching frequency may be used which has the order of magnitude as that used at maximum load, while at low power mode a much lower frequency may be used. Such power converters may be useable in either a normal power operating mode or a low-power operating mode, with a relatively high operating efficiency in each mode.

In embodiments, the further resistance is dimensioned such that the voltage across it is substantially equal to the clamping voltage, at the start of the commutation part of the operating cycle. In embodiments, the further resistance is dimensioned such that the sum of the voltage across it and the voltage across the capacitance is not greater than the clamping voltage, throughout the commutation interval.

In embodiments, the further resistance and the capacitance are dimensioned to minimise the integral over the commutation interval of the difference between the clamping voltage and the sum of the voltages across the resistance and the capacitance. It can be desirable to to make the commutation voltage, that is to say the sum of the voltages across the capacitance and the further resistance, as large as possible over as large a part of the commutation window as possible without exceeding the maximum voltage of the switch. The voltage across R2 starts at a maximum and reduces to zero during the commutation process. The voltage across C1 starts at a substantially zero value and increases to the allowed maximum during the commutation process. Their sum reaches a maximum sometime during the commutation interval. By choosing an optimum combination of R2 and C1, the desired maximum allowable clamping voltage may be approached as nearly as possible over the whole clamping interval resulting in the lowest commutation losses.

In embodiments the power converter is a flyback converter. The diode may have a slow reverse recovery. In particular, the diode may have a reverse recovery time of more than 250ns when switched from a forward current of 1A to a reverse current of 1A measured at IR = 0.25 A. Specification of reverse recovery time (us) is done by change over from a forward current to a reverse current and then measure the time between starting the reverse current and the moment that the revere current has reduced to a certain % of the peak reverse current. At low reverse current, such as occurs in the clamp, the reverse recovery time gets longer (product of reverse current and recovery time more or less constant) and can be a significant part of the secondary stroke time. For example a slow diode as used in this clamp, such as an 1 n4007 has a reverse recovery time Trr of 2µs @ lforward=0.5A, peak reverse current Ireverse=1A, and 25% measurement threshold to give measured reverse current lrr=0.25A, whilst a fast diode such as a BYV26 may have a reverse recovery time Trr of 30nsec when switched from IF = 0.5 A to lR = 1 A measured at lR = 0.25 A; A slow reverse recovery, which requires significant charge to restore the depletion region, may be beneficial, since it may assist in removing charge from the capacitor, independent of the further resistor; the current through the further resistor need be lower, and so a higher value resistance may be used, which reduces the losses.

According to another aspect there is provided a method of clamping a voltage across a primary side winding of a power converter during a commutation part of an operating cycling having at least a primary stroke and a secondary stroke by means of a series-parallel arrangement, the arrangement comprising a parallel arrangement of a capacitance and a resistance, the parallel arrangement being in series with a diode and a further resistance, the method comprising charging the capacitance from a substantially zero voltage to a clamping voltage during the commutation period and substantially discharging the capacitance during a remainder of the secondary stroke.

These and other aspects of the invention will be apparent from, and elucidated with reference to, the embodiments described hereinafter.

### Brief description of Drawings

Embodiments of the invention will be described, by way of example only, with reference to the drawings, in which
Figure 1 shows a schematic circuit diagram of a flyback low-power adapter;
figure 2 shows a clamping circuit based on a Zener and diode;
figure 3 shows an RCD clamping arrangements; and
figure 4 shows, at figure 4(a), the voltages at two nodes of an RCD clamping arrangement, according to known dimensions, and at figure 4(b), the voltages at two nodes on an RCD clamping arrangement dimensioned according to embodiments of the invention.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

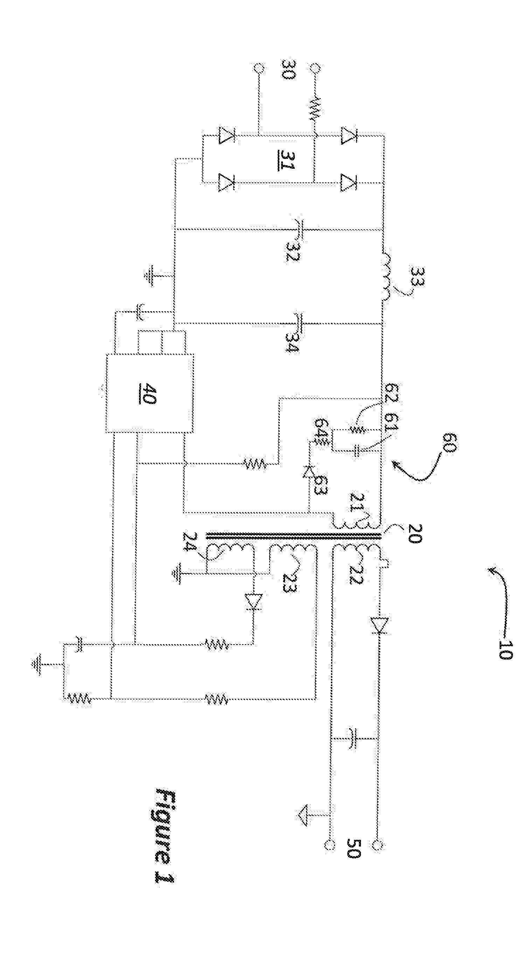

A schematic circuit diagram of a flyback low-power adapter 10 is shown in figure 1: the flyback converter includes a transformer 20 having a primary side winding 21, secondary winding 22, and auxiliary windings 23 and 24. An AC input at 30 is rectified and smoothed by a full wave rectifier 31 and first and second smoothing capacitors 32 and 34 respectively. Together with series inductor 33, parallel second smoothing capacitor 32 comprises an EMI filter. The rectified input is switchedly connected to the primary side winding 21 of transformer 20 by means of a combined controller and driver 40. The secondary side windings of transformer 20 include a main secondary winding 22, from which an output is derived at output 50. There are, furthermore, auxiliary windings 23 and 24 which are used to provide feedback to the controller, and to power the controller.

On the primary side, the figure shows a voltage clamping circuit across the primary winding 21. The clamping circuit 60, as shown, is a so-called "RCD" clamp: it includes a capacitor (and generically referred to as "C1") 61 in parallel with a resistor 62 (which is the specific instantiation of the generic "R1"). In series with this parallel combination, are a further resistor 64 (which is the specific instantiation of the generic "R2") and a diode 63 (which is the specific instantiation of the generic "D1").

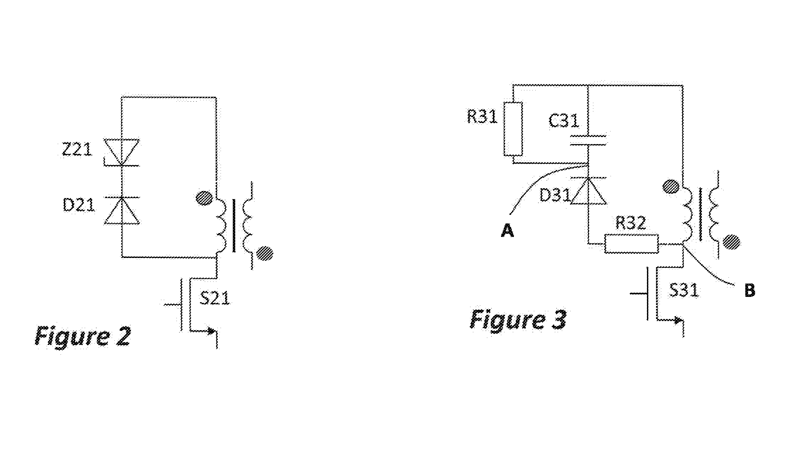

The skilled person will be aware of that alternative forms of clamping circuits are possible, and figure 2 shows a clamping circuit based on a Zener and diode. This simple circuit arrangement comprises a diode D21 in series with a Zener Z21 across the primary side winding of the transformer. The current is switchedly supplied to the transformer by means of switch S21. As discussed above, a Zener based clamping circuit is relatively expensive: a generally less expensive RCD circuit such as that shown in figure 1, is shown expanded in figure 3. This circuit shows a clamping arrangement or resistor R31 and capacitor and C31, placed in series with a diode D31 and a further resistor R32. As above, of the clamp is connected in parallel with the primary side winding of the transformer, to which current these supplied by means of switch S31. Node A is the node between the parallel capacitor-resistance, and the series-connected diode and further resistor; whilst node B is the node between the primary winding and switch. The skilled person will appreciate that the ordering of the series components in the series-parallel RCD(R) arrangement is not important. Thus the diode and further resistor are shown in relative opposite positions in figures 1 and 3; this does not affect the operation of the clamping circuit.

As mentioned above, using known RCD clamps circuits, the combination of the components is typically dimensioned in such a way that the voltage across C31 is substantially constant and equal to the desired clamping voltage. Since during each clamping action, the clamp voltage across C31 is already close to its final value as reached at the end of the clamp interval, while the energy stored in C31 during the clamping action is not allowed to increase the voltage across C31 much further, the value of C31 has to be chosen relatively large.

This does not cause an problems in normal operation; however, it may be non-ideal at low power operation: for a low power adapter operating at very low powers, the power is typically reduced by reducing the operating frequency and the on-time of the primary switch in order to reduce both converted energy per cycle and the number of cycles per time interval. Reducing the operating frequency has a result that less energy is delivered to the clamp. However, the discharge resistor (R31) is a fixed component and therefore it cannot be made to increase depending on the load (other than by introducing additional components at additional complexity and cost). Therefore the voltage across C31 reduces at low load and due to the time-constant R31 x C31 for discharging the capacitor C31, the voltage has dropped even more at the beginning of the next conversion cycle, while the relatively large value of C31 prevents C31 from being sufficiently charged during the clamp interval. The result is that the reduced clamping voltage at partial load and especially at extreme low loads gives considerable clamp losses and therefore causes the efficiency of the converter to drop dramatically. At low load and especially at no load a high efficiency is still desirable in order to deliver the residual power needed to provide proper operation of the application while keeping the power drawn from the mains as low as possible.

The inventor of the present invention has appreciated that this problem may be at least to some extent addressed, by changing the functional behaviour of an RCD clamp in such a way that the energy stored in the clamp is used to charge the clamp capacitor (C31) both at normal operation (nominal load) and low load conditions. This charging may fully charge the capacitor from a substantially or completely discharged state.

Firstly, instead of C31 already being charged before the start of the secondary stroke, the voltage across it is now built up from a low - typically zero or near-zero - value starting at the beginning of the secondary stroke and reaches its maximum value at the end of the clamping interval. (The skilled person will appreciate that in fact the clamping interval would most logically be defined as the interval during which the clamp conducts, while the commutation interval is the interval during which current commutates from primary winding to the other windings, The clamping interval is thus, by definition, not quite the same as the commutation interval, since commutation could already be started before the clamp starts to conduct.) Therefore the clamping capacitor C31 typically has much lower in value than for known RCD clamps, because the voltage difference between beginning and end of the clamping interval is now at a level of the clamping voltage itself.

As the voltage across the clamping capacitor C31 is typically approximately zero at the beginning of the clamp-interval, the series resistor R32 is chosen at a value where the current at the beginning of the clamp interval causes a voltage-drop across R32 which is close to the desired clamping voltage. Since there is little or no voltage across the capacitor C31 at this point, the value of the resistor R32 therefore determines the clamping voltage at the beginning of the commutation interval. In contrast, in known clamping circuits, the value of the series resistor R32 is typically significantly smaller, in order to prevent an overvoltage during the initial stages of the commutation period.

Since, during the commutation interval the current commutates to the secondary side, the current through R32 (and thus the voltage across it) gradually reduces, reflecting the charge stored in the clamp during the clamping interval. Therefore the sum of the voltages across the clamping capacitor C31 and the series resistor R32 determines the clamping voltage at each moment during the commutation interval. The combination of clamping capacitor C31 and series resistor R32 is now chosen such that the sum of both voltages comes as close as possible to the maximum allowed clamping voltage at maximum load during the commutation interval.

In order to determine the current through R32 at the start of the clamping interval and therefrom determine its resistance, it is noted that just after the end of the primary stroke, when the voltage across the primary side of the transformer crosses zero, all current built up during the primary stroke flows at the primary side of the transformer. This current continues to flow in R32, so the resistance of R32 can be calculated to get a predetermined clamping voltage across R32 at that moment. In practice however also parasitic capacitance is present between node B and ground, giving part of the current to flow in the parasitic capacitance (I=C x dv/dt) so R32 is usually determined by simulations or measurements.

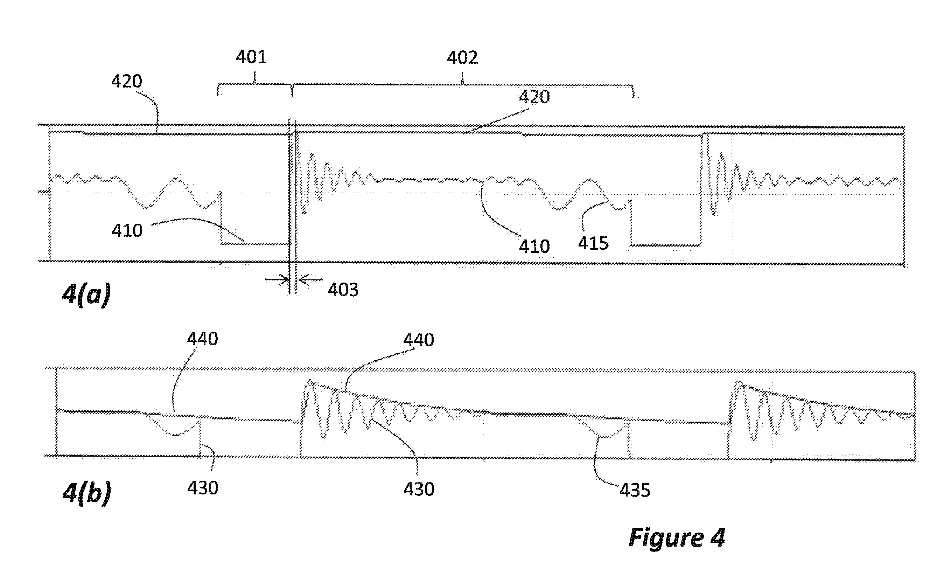

Operation of an RCD circuit, during medium to high power discontinuous conduction mode (DCM) operation, in which the switching frequency is relatively close to BCM (boundary conduction mode), of a fly-back low power adaptor, will now be described, for an RCD circuit dimensioned according to known clamping methods in figure 4(a), and for an RCD circuit dimensioned according to embodiments of the invention in figure 4(b). It will be appreciated that the discussion also holds for lower power operating modes.

Turning first to figure 4(a), the figure shows graph of simulations of the voltage at the nodes A and B in figure 3. Simulations over 2 complete operation cycles are shown. The voltage at node B, which corresponds to the voltage at the drain of the switch and is shown in figure 4(a) by curve 410, is "low" during the primary stroke of the converter, as shown at 401 and generally "high" during the secondary stroke, as shown at 402. However, superimposed on the "high" voltage, is a large damped oscillation, and one and a half sinusoidal cycles of ringing 415 at the end of these secondary stroke. The skilled person will appreciate that the ringing corresponds to the situation where the secondary current has reached zero. Therefore the average value of the ringing is equal to the rectified mains. This ringing frequency is defined by the parasitic capacitance at node B and the main inductance of the transformer, while the frequency of the high frequency damped oscillation at the beginning of the secondary stroke is defined by the parasitic capacitance at node B and the leakage inductance of the transformer. The large swing at the start of the oscillation and shown at 403 is defined by the peak value of the primary current and the parasitic capacitance of the switch's drain (dv/dt=lpeak/cpar), and thus the rapid fall of the primary current, resulting in a high induced voltage in this inductor, is limited by the clamping circuit to the clamping voltage.

The voltage at node A, that is to say the clamping voltage, is shown in figure 4(a) at 420. As can be seen from the figure, this voltage is nearly constant throughout the primary and secondary strokes. In the known dimensioning, C31 is chosen large enough to get a ripple-voltage that is small compared to the clamping voltage. The energy to be stored in the clamp together with the switching frequency determines the power stored in the clamp. Therefore the value for R31 directly follows from this power stored in the clamp and the desired clamping voltage and should be set for maximum load as this gives the maximum power in the clamp. As C31 is relatively large, it is not desirable to let it significantly discharge during the switching cycle, because the clamping energy is not capable of charging it fast enough to prevent extra clamp losses.

In contrast, at figure 4(b) are shown the voltages at the two nodes, A and B, of an RCD clamping arrangement dimensioned according to embodiments of the invention, at curves 430 and 440 respectively. In this case, not R31 but C31 determines the clamping voltage, because C31 is charged fully, or substantially, during the clamping action. The value of R31 is chosen such that it is possible to effectively or substantially discharge C31 (for example, to discharge it to less than 10% of the clamping voltage) during the switching cycle after the clamp action, that is to say, the remainder of the secondary stroke. It will be appreciated that during the secondary stroke the discharging may be limited, since it cannot be discharged below curve 430. Curve 430 may be described as being the average of the rectified mains voltage and Vout_reflected, with the super-imposed high frequency oscillation or ringing. After the secondary stroke, it can discharge further down towards 0.

At no load, also the second ringing 435 can be damped out, because of the low switching frequency of only a few 100Hz.

As this will result in a low value for C31, the way of operating remains unchanged for low load relative to a normal operating mode under a normal load, at which low load conditions lower primary peak current and lower switching frequency are used. This means that even at low load, C31 can be charged to a sufficiently high clamping voltage to make the commutation efficient.

It will be recalled that in known clamps, the clamp dimensioning is such that the large C31 value in combination with low operating frequency, which results in a longer discharge period for C31 at low loads, may make it impossible to charge C31 to a sufficient high voltage to make the commutation efficient at the prior art clamp dimensioning.

It has been determined by simulation, that for an example test case flyback low-power adapter, a no-load input power could be reduced from 7.5mW to 4.5mW, with only a minor decrease in efficiency at full load and without requiring any additional component to add cost.

Seen from one viewpoint, then, herein a power converter is disclosed which includes an RCD clamp across a primary winding. The RCD clamps the voltage across a primary winding of the converter, during a commutation part of an operating cycle. The capacitance part of the RCD clamp is dimensioned so as to be substantially discharged during the remainder of the secondary stroke, and to be charged to the clamping voltage during the commutation part. A resistance in series with the capacitance may be dimensioned such that the voltage across it is approximately equal to the clamping voltage at the start of the commutation period.

From reading the present disclosure, other variations and modifications will be apparent to the skilled person. Such variations and modifications may involve equivalent and other features which are already known in the art of clamping circuit, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality. In particular, for instance and without limitation, reference to "a" capacitor or "a" resistor shall not exclude the capacitance is provided by a parallel arrangement of a plurality of capacitors, or the resistance is provided by a parallel arrangement of a plurality of resistors; reference signs in the claims shall not be construed as limiting the scope of the claims.

## Claims

1. A power converter comprising a transformer having a primary side and a secondary side and a clamp for clamping a voltage at the primary side and across the clamp to a clamping voltage during a commutation part of an operating cycling, the operating cycle comprising at least a primary stroke and a secondary stroke including a commutation interval, the clamp comprising a parallel arrangement of a capacitance and a resistance, the parallel arrangement being in series with a diode and a further resistance, wherein
the capacitance is dimensioned so as to be charged to the clamping voltage during the commutation interval, and to be at least substantially discharged during the remainder of the secondary stroke.

2. A power converter according to claim 1, configured so that the voltage across the capacitance at the end of the secondary stroke is at most less than 10% or less than 1% greater than a reflected output-voltage across the primary side at that moment.

3. A power converter as claimed in claim 1 or 2, configured so that the voltage across the capacitance at the start of the primary stroke is at most less than 10% or less than 1% of the clamping voltage.

4. A power converter according to any of claims 1 to 3, configured for a normal operating mode and a low-power operating mode, wherein the capacitance is dimensioned so as, during operation in each of the normal operating mode and a low-power operating mode, to be charged to the clamping voltage during the commutation part of the operating cycling, and to be substantially discharged during the remainder of the secondary stroke.

5. A power converter according to any preceding claim, wherein the further resistance is dimensioned such that the voltage across it is substantially equal to the clamping voltage, at the start of the commutation part of the operating cycle.

6. A power converter according to any of claims 1 to 4, wherein the further resistance is dimensioned such that the sum of the voltage across it and the voltage across the capacitance is not greater than the clamping voltage, throughout the commutation interval.

7. A power converter according to claim 6, wherein the further resistance and the capacitance are dimensioned to minimise the integral over the commutation interval of the difference between the clamping voltage and the sum of the voltages across the resistance and the capacitance.

8. A power converter according to any preceding claim, wherein the power converter is a flyback converter.

9. A power converter according to any preceding claim, wherein the diode has a slow reverse recovery.

10. A power converter according to claim 9, wherein the diode has a reverse recovery time of more than 250ns when switched from a forward current of 1A towards a peak reverse current of 1A and measured at a reverse current lR of 0.25 A;

11. A method of clamping a voltage across a primary side winding of a power converter during a commutation part of an operating cycling having at least a primary stroke and a secondary stroke by means of a series-parallel arrangement, the arrangement comprising a parallel arrangement of a capacitance and a resistance, the parallel arrangement being in series with a diode and a further resistance,
the method comprising
charging the capacitance from a substantially zero voltage to a clamping voltage during the commutation period
and substantially discharging the capacitance during a remainder of the secondary stroke.
